Europäisches Patentamt

(19) European Patent Office

Office européen des brevets

(11) EP 0 764 619 B1

(12) **EUROPEAN PATENT SPECIFICATION**

(45) Date of publication and mention
of the grant of the patent:
**02.08.2000 Bulletin 2000/31**

(51) Int Cl.7: **C05F 9/00**, C05D 3/00,
B09B 3/00

(21) Application number: **96114942.4**

(22) Date of filing: **18.09.1996**

(54) **Treatment method for urban refuse**

Verfahren zur Entsorgung von Müll

Procédé d'élimination des déchets municipaux

(84) Designated Contracting States:
**DE ES FR GB**

(30) Priority: **19.09.1995 IT MI951947**

(43) Date of publication of application:
**26.03.1997 Bulletin 1997/13**

(73) Proprietor: **Waste Treatment Engineering Limited
London W1H 0HQ (GB)**

(72) Inventor: **Bramini, Sergio
IT-200052 Monza (IT)**

(74) Representative: **Petruzziello, Aldo et al
Racheli & C. s.r.l.
Viale San Michele del Carso, 4
20144 Milano (IT)**

(56) References cited:
**DE-A- 2 643 443**      **DE-A- 3 517 645**
**DE-A- 4 334 900**

**Description**

The present invention relates to a physico-chemical method of treating urban refuse, particularly the moist portion contained in such refuse, to make it dry and reduce the bacterial load, converting urban refuse into assimilable or special waste.

As is known, disposal of solid urban refuse is currently a source of considerable problems, accentuated by the fact that high-level dumps are required, that is with high technical characteristics of waterproofing and the like, to be able to receive the toxic-noxious substances contained in the moist portion of refuse.

DE-A-4,334,900 discloses a mixture of different compounds which are used, in combination with a pressure stage, to dehydrate liquid compounds (muds containing 35% at the maximum of dry product) and obtain a dry fertilizer.

DE-A-3,517,645 relates to a composition for amelioration of lands and for increasing the cycle of the nourishing substances.

The aim of the invention is to eliminate these drawbacks, proposing a treatment for urban refuse, before it is directed to the dump, that is capable of reducing the bacterial load of the refuse and facilitating subsequent disposal, with the possibility of using lower-level dumps, where lower disposal costs can be applied.

The aim is achieved, according to the invention, **with the feature of claim 1. The method of the invention makes use of** Urasite ®, a product known to experts in the field, consisting in a natural clay extracted from the URAS mine located in Sardinia (Italy), and belonging to the family of smectite, complex hydrosilicates of Al, Fe, Mg and Alkali, having as a general formula:

$$(SI, Al)_8(Al, Fe, Mg)4O_2O(OH)_4 \cdot Xn \cdot mH_2O + K_2O$$

where X are exchangeable cations, generally Na+,Ca++; n = 10 - 11; m = 4 - 10.

Urasite absorbs the moist and semi-liquid portion of the refuse, making it dry. The heavy metals and toxic salts contained in solution in the liquids are thus soaked up and the bacterial load is reduced, converting urban refuse into assimilable or special waste. During the treatment, Urasite, which is particularly rich in potassium oxide ($K_2O$) is used in combination with calcium oxide (CaO).

Deodorants such as pine resin or floral essences can be added to these basic components to mask the smells given off as a result of formation of caprolactam, hydrogen sulphide and mercaptans.

These substances react through hydration on contact with liquids, developing perfumed essences. The reaction is caused by substances contained in Urasite.

The treatment method according to the invention can be applied, with or without appropriate prior physico-mechanical treatment, to urban refuse, that is domestic waste, and also to industrial waste if it comprises a moist phase containing toxic-noxious polluting substances.

Remaining within the context of urban refuse, treatment according to the invention can be carried out on the waste as it is.

In this case the refuse as it is collected, including organic and non-organic parts, is ground, preferably with a cutter grinder so as to make it as homogeneous as possible (dry parts saturated with moist parts) and of such a size as to be easily mixed with the products used for the chemical treatment, namely Urasite, henceforth indicated simply by the letters U.R., and CaO. These chemical compounds, which are in powder form, in suitable proportions, are added to the refuse after it has been ground and homogenized, so as to trigger the reaction, using a high-speed mixer.

In the case of separate collection of domestic waste, using for example a transparent bag (purple or neutral) for dry materials (paper, plastic, rags, aluminium cans, tin cans, etc,) and a different bag, normally black, for organic materials such as kitchen waste, dry waste contaminated with organic substances and the like, treatment according to the invention will be done only on the moist portion coming from the bags of organic materials. Treatment with U.R. + CaO can in this case be done directly, without prior grinding, provided that the contaminated dry materials mixed with the liquids of the organic materials are not present in large amounts.

Lastly, provision can be made for the moist portion to be separated from solid urban refuse (R.S.U.) by rough grinding and mechanical screening. In this case the refuse as is is first ground and then put into a rotary screen, for example with holes from 80 to 100 mm, suitable for separating the two primary portions. The dry materials thus remain in the up-screen (plastic, paper, aluminium cans, tin cans, if not previously separated with an iron remover), while the moist portion, mainly organic substances coming from domestic waste, is collected in the down-screen. This moist portion is directed to the mixer, where it reacts with U.R. + CaO.

In all the cases described, the moist waste undergoes a partial change of status after treatment, passing from toxic-noxious to special; and can be stored at the dump or incinerated, using plant designated for non-hazardous waste. In particular, refuse treated according to the invention can be classified as special non toxic-noxious waste, on the basis of current regulations in Italy (Presidential Decree 915/82 of 10/09/82 and Interdepartmental Committee Decision of 27/08/84).

For treatment of the moist portion of the refuse, Urasite and calcium oxide are advantageously used in equal parts and in a total amount related to the amount of liquid and semi-liquid parts (L.Q.) present in the waste. The amount of U.R. + CaO mixture in proportion to the refuse advantageously ranges from 5% to 30% in weight. In the first stage of the reaction, U.R. will absorb the liquid and semi-liquid parts (L.Q.) composed of both polar and non-polar liquids, in an amount equal to 75% of its weight. Water, organic solvents and other liquids present are thus absorbed.

U.R. also incapsulates heavy metals (lead and cadmium), light metals (copper and aluminium), hexavalent chrome, phenols, cyanides and other substances normally present in refuse.

CaO reacts with the water present in solution, forming hydrated lime ($Ca(OH)_2$) and raising the temperature from a minimum of 40°C to a maximum of 80°C.

The potassium oxide ($K_2O$) present in U.R. also reacts to form potassium hydroxide (KOH).

The exothermic reaction, together with that of neutralisation, prevents the formation of bacteria.

Very schematically, considering only the moist part of the refuse (RSU=L.Q. + $nH_2O$) the reaction that is obtained by adding U.R. + CaO is the following:

$$L.Q.+ nH_2O + U.R. + CaO \rightarrow Ca(OH)_2+(n-1)H_2O+(U.R. + L.Q.) + nCal.$$

U.R.+ L.Q., the result of the reaction, are the semi-liquid parts absorbed by Urasite and appear in the form of dry, hot, brown-grey soil. Following treatment weak but continuous emissions of ammonia ($NH_3$) are detected.

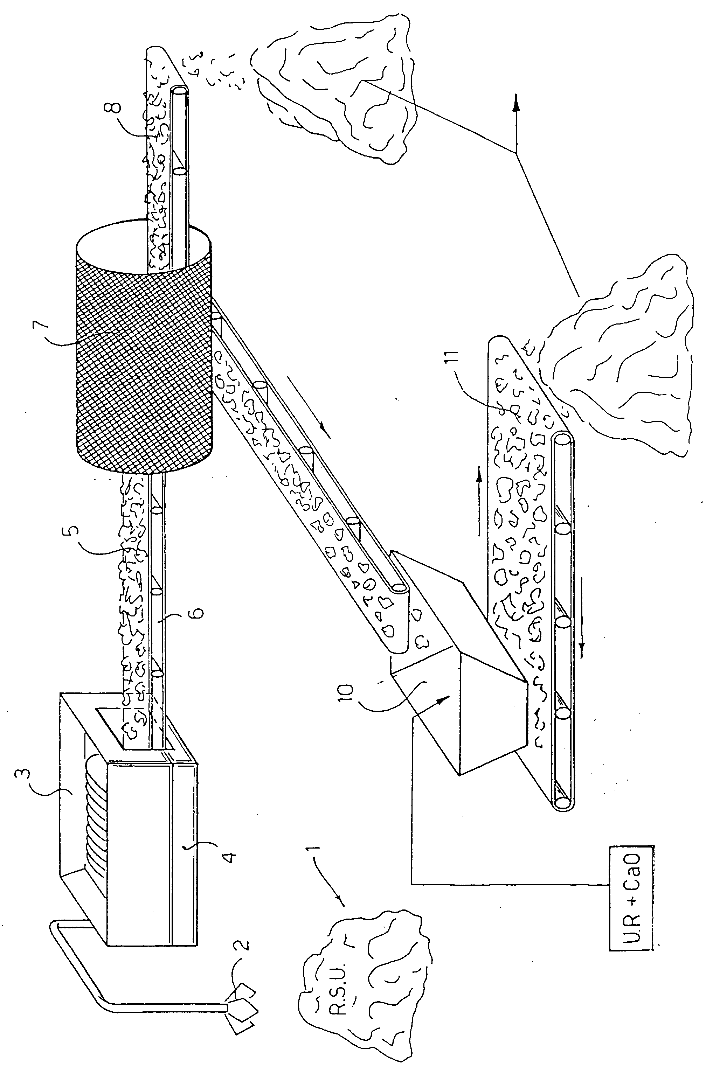

With reference to the attached figure, which shows a diagram of a refuse sanitising plant, a modality for treating refuse using the method according to the invention will now be described purely by way of non-limiting example.

In this figure, the reference numeral 1 indicates a pile of solid urban refuse which is transferred, by means of a bucket 2, to a collecting tank 3, having a bottom 4, where the percolated liquid is collected and sent separately to a purification plant.

Inside the tank 3 is disposed a rough grinder, of a type that does not reduce the particle size to such an extent as to make subsequent separation by means of a screen problematical.

For this purpose a grid-type or mixed technology (grid + blades) grinder is used. The refuse thus ground 5 leaving the tank 3, is sent, by means of a conveyor 6, to a rotary screen 7, for example with holes from 80 to 100 mm, suitable for separating the two primary portions.

In fact the dry materials 8, such as plastic, paper, tins, etc, remain in the up-screen and are accumulated for direct disposal.

The moist portion, on the other hand, mainly organic substances from domestic waste, indicated by 9 in the diagram, remains in the down-screen and is sent to a high-speed mixer 10, where the mixture of Urasite and calcium oxide is added, to produce the exothermic and neutralising reaction described above, thus obtaining a dry product 11, classified as special non toxic-noxious waste, which can therefore be disposed of together with the untreated waste 8.

**Claims**

1. A treatment method for making dry and reducing the bacterial load of solid urban refuses containing a moist portion, characterized by treating said refuses with complex hydrosilicates of Al, Fe, Mg and alkali of general formula:

(I)　　$(Si,Al)_8(Al, Fe, Mg)4O_2O(OH)_4.Xn.mH_2O + K_2O$

where:

$\underline{X}$ are exchangeable cations, generally $Na^+$, $Ca^{++}$;
m=4- 10
n = 10, 11.

2. A method according to claim 1, characterized in that said treatment is carried out with a mixture of the complex of formula (I) and CaO.

3. A method according to claim 2, characterized by the following schematic reaction:

$$L.Q.+nH_2O+U.R.+CaO \rightarrow Ca(OH)_2+(n-1)H_2O+(U.R.+L.Q.)+nCal.$$

In which:

L.Q.+$nH_2O$ = moist part of solid refuse;
L.Q. = liquid and semi-liquid phase present in the refuse;
U.R. = complex of formula (I);
(U.R.+L.Q.) = dry product of the reaction.

4.  A method according to claim 3, in which said mixture contains equal parts of said complex of formula (I) and CaO.

5.  A method according to claims 2 or 3, in which the amount of said mixture varies from 5 to 30% by weight, with respect to the overall weight of the refuse.

6.  A method according to any one of the preceding claims, characterized in that said complex of formula (I) absorbs the liquid and semi-liquid parts (L.Q.), composed both of polar and non-polar liquids, in amounts up to 75% of its weight and incapsulates heavy metals such as lead and cadmium, light metals such as copper and aluminium, hexavalent chrome, phenols, cyanides and other substances present in the waste.

7.  A method according to any one of the preceding claims, characterized in that $K_2O$ present in the complex of formula (I) reacts to form KOH.

8.  A method according to any one of the claims 2 to 7, characterized in that CaO reacts with water present in the solution, forming $Ca(OH)_2$ and raising the temperature from a minimum of 40°C to a maximum of 80°C.

9.  A method according to any one of the preceding claims, characterized in that deodorants are added, such as pine resin and floral essences, which react with liquids to give off fragrant substances.

10. A method according to any one of the preceding claims, in which the waste is treated as is possibly after homogeneous grinding which saturates the dry parts with the moist parts.

11. A method according to any one of claims 1 to 9 in which, before treatment, the moist portion is separated out by means of mechanical screening.

12. Use of the complex hydrosilicates of formula (I) alone and their mixtures with CaO for treating moist portion-containing solid urban refuses.

**Patentansprüche**

1.  Eine Aufbereitungssmethode zum Trocknen und Verringern der bakteriellen Belastung von Stadtmüll, der einen Anteil an Feuchtigkeit enthält, dadurch gekennzeichnet, daß der genannte Müll mit komplexen Hydrosilikaten von Al, Fe, Mg und Alkali der allgemeinen Formel:

$$(I) \qquad (Si,Al)8(Al, Fe,Mg)4O_2O(OH)_4Xn.mH_2O+K_2O$$

behandelt wird, wobei:

X die austauschbaren Kationen sind, im allgemeinen $Na^+$, $Ca^{++}$;
m = 4 - 10
n= 10,11.

2.  Eine Methode nach Anspruch 1, dadurch gekennzeichnet, daß die genannte Aufbereitung mit einer Mischung des Komplexes der Formel (I) und CaO durchgeführt wird.

3.  Eine Methode nach Anspruch 2, gekennzeichnet durch folgende schematische Reaktion:

## EP 0 764 619 B1

$$L.Q.+nH_2O+U.R.+CaO \rightarrow Ca(OH)_2+(n-1)H_2O+(U.R.+L.Q.)+nCal.$$

Wobei:

L.Q.+$nH_2O$ = Feuchtigkeitsanteil des Mülls;
L.Q. = flüssige und halbflüssige im Müll vorhandene Phase;
U.R. = Komplex von Formel (I)
(U.R.+L.Q.) = Trockenprodukt der Reaktion.

4. Eine Methode nach Anspruch 3, wobei die besagte Mischung gleiche Teile des genannten Komplexes von Formel (I) und CaO enthält.

5. Eine Methode nach den Ansprüchen 2 oder 3, wobei die Menge der genannten Mischung zwischen 5 bis 30% an Gewicht im Verhältnis zum Gesamtgewicht des Mülls schwankt.

6. Eine Methode nach einem beliebigen der vorausgegangenen Ansprüche, dadurch gekennzeichnet, daß der besagte Komplex von Formel (I) die flüssigen und halbflüssigen Anteile (L.Q.) absorbiert, die beide aus polaren und unpolaren Flüssigkeiten bestehen, und zwar in einer Menge bis zu 75% seines Gewichts, sowie Schwermetalle wie Blei und Cadmium, Leichtmetalle wie Kupfer und Aluminium, sechswertigen Chrom, Phenole, Zyanide und andere im Müll vorhandene Substanzen einkapselt.

7. Eine Methode nach einem beliebigen der vorausgegangenen Ansprüche, dadurch gekennzeichnet, daß das im Komplex der Formel (I) vorhandene $K_2O$ reagiert, um KOH zu bilden.

8. Eine Methode nach einem beliebigen der Ansprüche von 2 bis 7, dadurch gekennzeichnet, daß CaO mit dem in der Lösung vorhandenen Wasser reagiert und Ca(OH)2 bildet und die Temperatur von einem Mindestwert von 40°C auf einen Höchstwert von 80°C erhöht.

9. Eine Methode nach einem beliebigen der vorausgegangenen Ansprüche, dadurch gekennzeichnet, daß desodorierende Substanzen wie Harzessenzen aus Kiefern und Blumen zugesetzt werden, die mit den Flüssigkeiten reagieren, um Aromastoffe freizusetzen.

10. Eine Methode nach einem beliebigen der vorausgegangenen Ansprüche, dadurch gekennzeichnet, daß der Müll wie er ist soweit wie möglich nach der homogenen Mahlung, die die Trockenanteile mit den Feuchtanteilen saturiert, aufbereitet wird.

11. Eine Methode nach einem beliebigen der Ansprüche von 1 bis 9, bei der der Trockenanteil vor der Aufbereitung mit Hilfe von mechanischer Siebung vom Feuchtanteil getrennt wird.

12. Die Verwendung der komplexen Hydrosilikate von Formel (I) allein und ihre Mischungen mit Cao, um Stadtmüll aufzubereiten, der einen Anteil an Feuchtigkeit enthält.

## Revendications

1. Une méthode de traitement pour sécher et réduire la charge bactérienne de déchets urbains solides contenant une partie d'humidité, caractérisée par le fait qu'elle traite lesdits déchets avec des hydrosilicates complexes de Al, Fe, Mg et des alcalis de formule générale :

$$(I) \qquad (Si, Al)_8(Al, Fe, Mg)4O_2O(OH)_4.Xn.mH_2O+K_2O$$

où :

$\underline{X}$ sont des cations échangeables, généralement $Na^+$, $Ca^{++}$ ;
m = 4-10
n = 10,11.

**2.** Une méthode selon la revendication 1, caractérisée par le fait que ledit traitement est effectué avec un mélange du complexe de la formule (I) et CaO.

**3.** Une méthode selon la revendication 2, caractérisée par la réaction schématique suivante :

$$L.Q.+nH_2O+U.R.+CaO \rightarrow Ca(OH)_2+(n-1)H_2O+(U.R.+L.Q.)+nCal.$$

où :

L.Q.$+nH_2O$ = partie d'humidité du déchet solide ;
L.Q. = phase liquide et semi-liquide présente dans le déchet ;
U.R. = complexe de formule (I)
(U.R.+L.Q.) = produit sec de la réaction.

**4.** Une méthode selon la revendication 3, où ledit mélange contient des parties égales dudit complexe de formule (I) et CaO.

**5.** Une méthode selon la revendication 2 ou 3, où la quantité dudit mélange varie entre 5 et 30 % en poids par rapport au poids global des déchets.

**6.** Une méthode selon une revendication quelconque parmi les revendications précédentes, caractérisée par le fait que ledit complexe de formule (I) absorbe les parties liquides et semi-liquides (L.Q.), composées toutes deux de liquides polaires et de liquides non polaires, dans une quantité allant jusqu'à 75 % de leur poids et qu'il capsule des métaux lourds tels que le plomb et le cadmium, des métaux légers tels que le cuivre et l'aluminium, le chrome hexavalent, des phénols, des cyanures et d'autres substances présentes dans les déchets.

**7.** Une méthode selon une revendication quelconque parmi les revendications précédentes, caractérisée par le fait que le $K_2O$ présent dans le complexe de la formule (I) réagit pour former du KOH.

**8.** Une méthode selon une revendication quelconque de 2 à 7, caractérisée par le fait que le CaO réagit avec l'eau présente dans la solution, en formant du Ca $(OH)_2$ et en augmentant la température d'un minimum de 40°C à un maximum de 80°C.

**9.** Une méthode selon une revendication quelconque parmi les revendications précédentes, caractérisée par le fait que des déodorants tels que des essences de résine de pin et de fleurs qui réagissent avec les liquides sont ajoutés pour délivrer des substances aromatiques.

**10.** Une méthode selon une revendication quelconque parmi les revendications précédentes, où les déchets sont traités autant que possible après le broyage homogène qui sature les parties sèches avec les parties humides.

**11.** Une méthode selon une revendication quelconque parmi les revendications de 1 à 9, où, avant le traitement, la partie humide est séparée au moyen d'un triage mécanique.

**12.** Utilisation des hydrosilicates complexes de formule (I) tout seuls et de leur mélange avec le CaO pour traiter des déchets solides urbains contenant une partie d'humidité.